# EUROPÄISCHE PATENTSCHRIFT

(11) **EP 0 715 365 B1**
(45) Veröffentlichungstag und Bekanntmachung des Hinweises auf die Patenterteilung: **14.01.1998**
(21) Anmeldenummer: 95117237.8
(22) Anmeldetag: 02.11.1995
(51) Int. Cl.: H01M 2/30, H01M 2/10, B60R 16/04, H01R 11/28

(54) **Akkumulatorenbatterie**
Accumulator
Accumulateur

(30) Priorität: 02.12.1994 DE 9419278 U
(43) Veröffentlichungstag der Anmeldung: 05.06.1996
(73) Patentinhaber: VB Autobatterie GmbH, D-30419 Hannover (DE)
(72) Erfinder: Gummelt, Klaus, D-31552 Rodenberg (DE); Eisenacher, Werner, D-31171 Norstemmen (DE); Christophersen, Willi, D-31555 Suthfeld (DE); Haase, Hans-Jürgen, D-30826 Garbsen (DE); Böhle, Christian, Dr., D-30823 Garbsen (DE)
(74) Vertreter: Kaiser, Dieter Ralf, Dipl.-Ing.

(56) Entgegenhaltungen:
- DE-C- 3 821 861
- DE-U- 9 419 278
- FR-A- 2 096 655
- GB-A- 2 146 834
- US-A- 2 551 990
- US-A- 5 106 319
- US-A- 5 171 169
- US-A- 5 358 798
- PATENT ABSTRACTS OF JAPAN vol. 008 no. 025 (E-225) ,2.Februar 1984 & JP-A-58 186157 (NISSAN JIDOSHA KK) 31.Oktober 1983,
- PATENT ABSTRACTS OF JAPAN vol. 006 no. 107 (E-113) ,17.Juni 1982 & JP-A-57 038566 (YUASA BATTERY CO LTD) 3.März 1982,

## Beschreibung

Die Erfindung betrifft eine Akkumulatorenbatterie, insbesondere Starterbatterie für Kraftfahrzeuge, mit einem Batteriegehäuse, durch das hindurch die Pole der Batterie nach außen geführt sind, wobei zumindest am positiven Pol neben einem elektrischen Anschluß für ein Starterkabel zusätzliche Anschlüsse für die Versorgung anderer elektrischer Verbraucher im Fahrzeug vorgesehen sind.

Batterien, die über Einrichtungen für Mehrfachanschlüsse verfügen, sind bekannt. Bei einer besonders einfachen technischen Lösung gemäß dem deutschen Gebrauchsmuster G 8906267 wird der Mehrfachanschluß durch einen mit einem der Batteriepole elektrisch verbundenen Draht gebildet, auf dem einzelne mit ihm verbundene Stecker oder Buchsen gewissermaßen wie die Perlen auf einer Schnur aufgereiht sind. Die Anordnung der Stecker und Buchsen läßt sich durch einfaches Biegen des Drahtes den jeweiligen Erfordemissen anpassen. Auch eine Integration dieses Mehrfachanschlusses in den Batteriedeckel ist möglich, indem der Draht mit seinen Buchsen entsprechend mit Kunststoff umspritzt wird.

Der DE-OS 3333308 läßt sich speziell für eine Starterbatterie ein Leiteranschluß entnehmen, der die Möglichkeit für drei Nebenanschlüsse bietet.

Im heutigen Kraftfahrzeugbau ist man bestrebt, insbesondere den positiven Pol der Starterbatterie mit mehr als einem elektrischen Anschluß zu versehen, um so die direkte Energieversorgung diverser elektrischer Geräte sicherzustellen.

Der erwähnte Leiteranschluß kommt diesen Belangen bereits weitgehend entgegen. Zur Bereitstellung der Nebenanschlüsse zum Kontaktieren entsprechender Anschlußkabel ist am Pol der Batterie, der beispielsweise als hochstehender Flachpol ausgebildet ist, eine Aufnahmeplatte über einen abgewinkelten metallischen Flansch seitlich angeschraubt. An der anderen Seite des Flachpols ist das Starterkabel befestigt.

Die Aufnahmeplatte für die Nebenanschlüsse, die durch Schraubbefestigung hergestellt werden, wird durch Stützstege im Abstand zum Batteriedeckel gehalten. Das Grundmaterial der Platte ist Kunststoff, wobei Kontaktplatten oder Leiterfahnen entweder mit eingespritzt oder durch Nieten befestigt sind.

An den Anschlußstellen befinden sich Bohrungen in der Aufnahmeplatte, an deren Unterseite Stanzmuttem eingesetzt sind, um die Schraubbefestigung beispielsweise von Ösen oder Polschuhen der Nebenanschlußkabel zu ermöglichen.

Mit anderen bekannten Anordnungen für Mehrfachanschlüsse teilt die beschriebene Leiterplatte insbesondere den Mangel, daß sie nicht bei Benutzung von Montagerobotem geeignet ist.

Der Erfindung liegt die Aufgabe zugrunde, einen Mehrfachanschluß für Starterbatterien anzugeben, der sich für eine vollautomatische Montage eignet und dessen Leitungssystem so angelegt ist, daß von ihm keine Brand- oder Unfallgefahr ausgeht.

Die Aufgabe wird erfindungsgemäß mit einer Akkumulatorenbatterie gelöst, wie sie in Anspruch 1 definiert ist.

Der neue Mehrfachanschluß wird danach von einer Kunststoffplatte gebildet, die leitfähige Einlagen zur Kontaktierung der Nebenanschlüsse mit dem positiven Endpol besitzt, wobei die Kontaktierungseinlagen durch Sicherungshalter unterbrochen sind.

Mit dieser Maßnahme wird erreicht, daß neben der günstigen Unterbringung der Anschlüsse auch die Absicherung noch innerhalb dieses batterienahen Bereiches erfolgt und keine ungeschützten Leitungen den Motorraum durchqueren. Lediglich das Starterkabel ist wie üblich von der Absicherung ausgenommen.

Die leiffähigen Einlagen bestehen aus möglichst hochwertigen Leitmaterialien wie Kupfer oder Messing und bilden für jede erforderliche Kontaktierung eine entsprechende Leiterbahn durch das Kunststoffgrundmaterial. Außer durch Drähte mit Lötverbindungen an den Anschlußstellen können die Leiterbahnen auch durch gezielte Einlagerungen eines hochleiffähigen Materials in den Kunststoff der Trägerplatte erzeugt werden, derart, daß die Leitungspfade mit der gewünschten Geometrie die Trägerplatte durchziehen, wobei auch in diesem Fall alle leitenden Bereiche einzeln abgesichert werden können. Dabei werden die Sicherungen an den Unterbrechungsstellen der Leiterbahnen auf die Sicherungshalter aufgesteckt.

Die Erfindung und einige besonders vorteilhafte Ausgestaltungen der neuen Akkumulatorenbatterie werden im folgenden anhand von Figuren erläutert.

Figur 1 zeigt eine Akkumulatorenbatterie gemäß der Erfindung in einer Draufsicht.

Figur 2 zeigt eine Längsseite der Akkumulatorenbatterie.

Figur 3 zeigt die Akkumulatorenbatterie von einer Stirnseite.

Figur 4 zeigt eine alternative Anordnung der Mehrfachanschlüsse um den positiven Endpol nach Figur 1.

Figur 5 zeigt als Altemative zu Figur 1 eine Akkumulatorenbatterie mit einer beide BatterieEndpole verbindenden Befestigungsschiene in einer Draufsicht.

Figur 6 zeigt die gleiche Akkumulatorenbatterie von einer Längsseite.

Figur 7 zeigt die gleiche Akkumulatorenbatterie von einer Stirnseite.

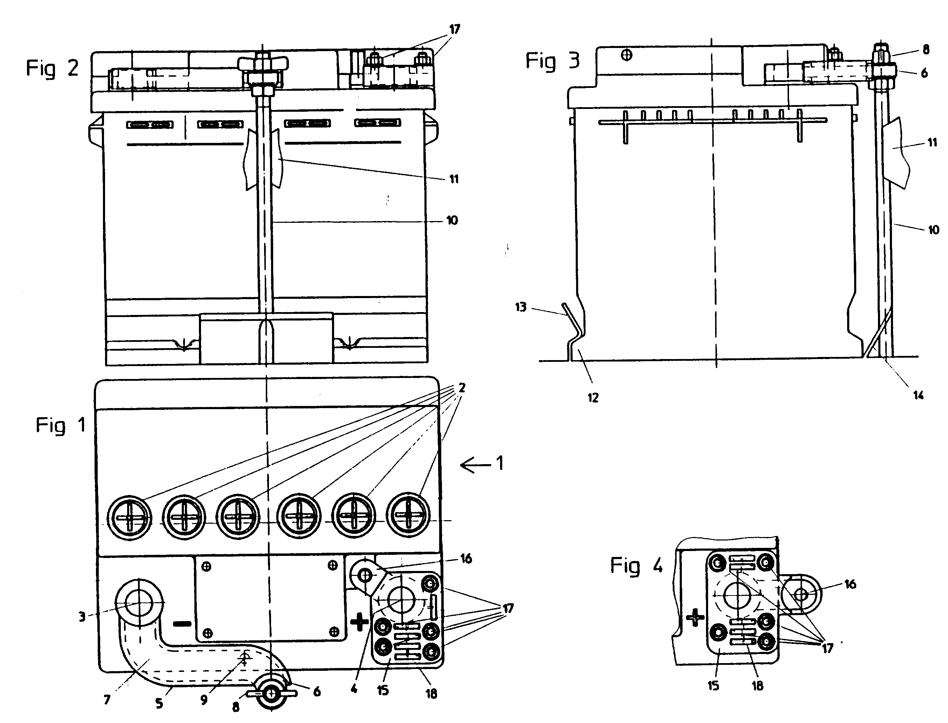

Gemäß Figur 1 besitzt die ausweislich ihrer sechs Verschlußstopfen 2 sechszellige Akkumulatorenbatterie 1 einen negativen Endpol 3 und einen positiven Endpol 4.

Mit dem positiven Endpol ist eine Grundplatte 15 aus Kunststoff fest verbunden. Sie bildet die Basis für den Anschluß des Starterkabels sowie für weitere Anschlüsse (Nebenanschlüsse) für die elektrische Versorgung von Stromverbrauchem (u.a. Beleuchtung) im Fahrzeug. Der Befestigung des Starterkabels dient eine aus dem Kunststoff seitlich herausragende metallische Lasche 16, während zum Kontaktieren der weiteren Anschlüsse eine entsprechende Anzahl -in diesem Beispiel fünf- Anschlußschrauben 17 über die Platte verteilt vorgesehen sind. Über im Kunststoff inkorporierte Leiterbahnen (nicht dargestellt) besitzen alle Nebenanschlüsse einen individuellen Kontakt zum Pol.

Erfindungsgemäß sind alle Leiterbahnen jeweils mit einer Sicherung 18 ausgestattet, derart, daß die Leiterbahn an einer geeigneten Stelle zwischen Pol und dem betreffenden Anschluß durch eine Klemmhalterung unterbrochen ist, auf welche von oben her die Sicherung 18 aufsteckbar ist. Jeder Nebenanschluß ist dadurch bereits in Polnähe einzeln für sich abgesichert, und es existieren im Fahrzeug keine ungesicherten elektrischen Leitungen mehr (mit Ausnahme des Starterkabels), von denen bei Kurzschlüssen eine Brandgefahr ausgeht.

Bei hinreichendem Platz im Umfeld der Batterie kann die Anschlußplatte auch wie im Beispiel der Fig. 4 so gestaltet und angeordnet sein, daß die Lasche 16 für den Starterkabelanschluß über den Umriß der Batterie hinausragt, was ihre Zugänglichkeit erhöht.

Die Anschlußschrauben 17 korrespondieren mit entsprechenden Gewindebolzen in der Grundplatte, als welche die Nebenanschlüsse ausgebildet sind, was für deren Zugänglichkeit ebenfalls günstig ist. Die feste Verbindung der Grundplatte mit dem Pol ist durch Anschweißen oder Anlöten der Kontaktierungseinlagen an den Pol und durch eine zusätzliche Kunststoffumspritzung gewährleistet.

Als eine weitere für die Halterung der Batterie im Fahrzeug vorteilhafte Maßnahme ist gemäß Fig. 1 die Anordnung einer Befestigungsschiene 5 am negativen Batterie-Endpol 3 vorgesehen, welche, gegebenenfalls an einem Fixpunkt 9 vom Batteriedeckel gestützt, an ihrem Ende eine Befestigungsöse 6 aufweist, welche über den Batterieumriß hinausragt. Die Befestigungsöse ermöglicht, ohne daß es eines Werkzeuges bedarf, nur im Zusammenwirken mit einer handlichen Schraube oder Flügelmutter 8 eine feste, starre Anbindung der Schiene, die durch Schweißen mit dem Batteriepol fest verbunden ist, an eine Halterung 11 des Fahrzeugchassis oder, wie im Beispiel der Figuren 2 und 3 gezeigt, an einen auf einem Batterieträger verankerten Stehbolzen 10.

Mit dieser den negativen Batteriepol direkt erfassenden Befestigung wird gleichzeitig die Massekontaktierung im Fahrzeug hergestellt. Die Schiene ist daher entweder vollständig aus metallischen elektrisch leitendem Material oder besitzt als Kunststoffausführung eine leitfähige Einlage 7, z.B. ein Flachbandkabel aus Kupfer.

Der Vorteil des neuen Batterieanschlusses kommt, wie aus Fig. 3 leicht erkennbar, besonders dann zum Tragen, wenn der Blockkasten nach seiner exakten Positionierung über ein Leitblech 14 an einer festen Gegenleiste 13 mit der diagonal dem Pol gegenüberliegenden Bodenleiste 12 verklammert ist, so daß die Befestigung durch den Batterieschwerpunkt hindurchgeht. Das Gehäuse selbst ist hierdurch keinerlei Spannungen ausgesetzt.

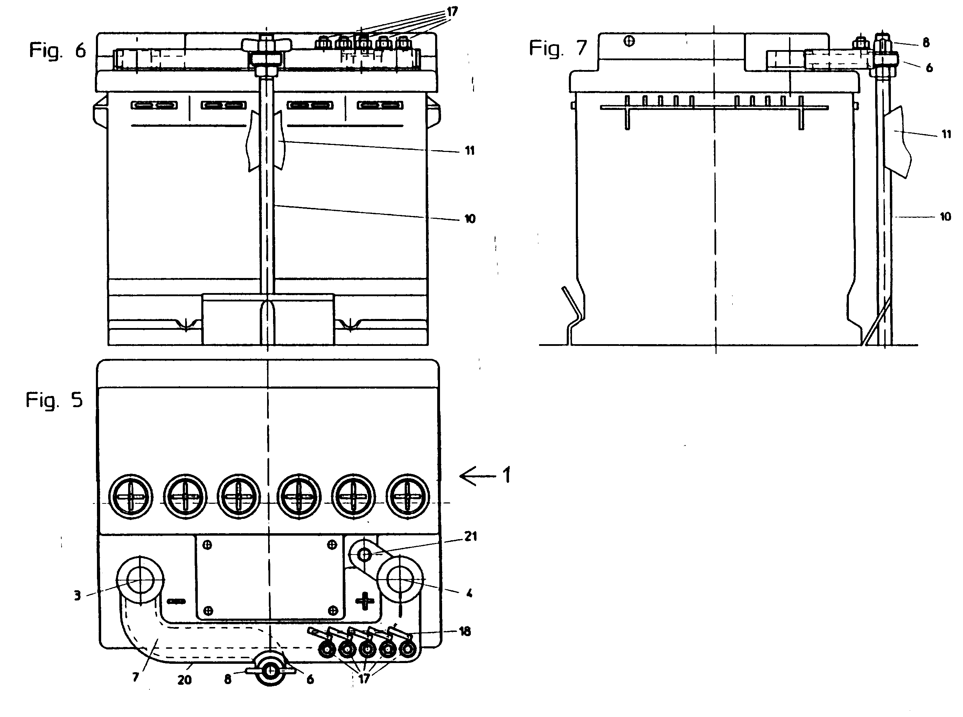

Besonders günstig ist die in Fig. 5 wiedergegebene Anbindung beider Batterie-Endpole der Akkumulatorenbatterie an eine gemeinsame Befestigungsschiene 20. Bei dieser Ausführung des Batterieanschlusses kann der dem positiven Pol zugeordnete Arm der Schiene zugleich die Funktion der Anschlußplatte 15 (Fig. 1) ausüben, indem deren Mehrfachanschlüsse mit ihren Anschlußschrauben 17 und femer deren Einzelsicherungen 18 von diesem Schienenteil getragen werden. Jedoch muß dieses dem positiven Endpol zugehörige Schienenteil mit allen seinen inkoporierten Leiterbahnen von dem bis zur Befestigungsöse 6 reichenden negativen Teilabschnitt elektrisch abgekoppelt sein, da sich sonst eine Kurzschlußbrücke ergeben würde.

Eine Metall-Lasche 21 zum Anschließen des Starterkabels ist an den positiven Endpol 4 direkt angeschweißt.

Die Seitenansichten dieser Batterie gemäß den Figuren 6 und 7 entsprechen den in Fig. 2 und 3 wiedergegebenen Aussichten.

Mit dem Vorteil der elektrischen Absicherung des neuen Mehrfachanschlusses im unmittelbaren Polbereich verbindet sich wegen der ausschließlich von oben her frei zugänglichen Schraubbefestigungen der Vorteil der Montierbarkeit durch einen Roboter. Ebenfalls robotertauglich ist die bevorzugte Befestigungsweise der Batterie mittels der Schiene, die sowohl Befestigungsteil als auch Anschlußteil ist. Spannkräfte werden dadurch vom Gehäuse ferngehalten.

## Patentansprüche

1. Akkumulatorenbatterie, insbesondere Starterbatterie für Kraftfahrzeuge, mit einem Batteriegehäuse, durch das hindurch die Pole der Batterie nach außen hindurchgeführt sind, wobei zumindest am positiven Pol neben einem elektrischen Anschluß für ein Starterkabel zusätzliche Nebenanschlüsse für die Versorgung anderer elektrischer Verbraucher im Fahrzeug vorgesehen sind, dadurch gekennzeichnet, daß der Mehrfachanschluß von einer Grundplatte (15) aus Kunststoff gebildet ist, die leitfähige Einlagen zur Kontaktierung der Nebenanschlüsse (17) mit dem positiven Endpol (4) besitzt, welche durch Sicherungshalter (18) unterbrochen sind.

2. Akkumulatorenbatterie nach Anspruch 1, dadurch gekennzeichnet, daß die Sicherungshalter (18) von oben zugänglich angeordnet sind.

3. Akkumulatorenbatterie nach den Ansprüchen 1 und 2, dadurch gekennzeichnet, daß die Nebenanschlüsse (17) als Gewindebolzen ausgebildet sind.

4. Akkumulatorenbatterie nach einem der Ansprüche 1 bis 3, dadurch gekennzeichnet, daß die leitfähige Einlage der Grundplatte (15) mit dem positiven Endpol (4) unlösbar durch Verschweißen oder Verlöten verbunden ist.

5. Akkumulatorenbatterie nach einem der Ansprüche 1 bis 4, dadurch gekennzeichnet, daß die Grundplatte (15) integraler Bestandteil einer Batteriebefestigungsschiene (20) ist.

6. Akkumulatorenbatterie nach einem der Ansprüche 1 bis 5, dadurch gekennzeichnet, daß der Anschluß (16) für das Starterkabel (16, 21) in Form einer Lasche innerhalb oder außerhalb des Batterieumrisses angeordnet ist.

7. Akkumulatorenbatterie nach Anspruch 5, dadurch gekennzeichnet, daß die Battedebefestigungsschiene (20) eine über den Batterieumriß hinausstehende Befestigungsöse (6) besitzt.

## Claims

1. Accumulator, in particular starter battery for motor vehicles, having a battery housing through which the terminals of the battery are led to the outside, additional secondary connections for supplying other electrical loads in the vehicle being provided, at least on the positive terminal, in addition to an electrical connection for a starter cable, characterized in that the multiple connection is formed from a baseplate (15) made of plastic which has conductive inlays to make contact between the secondary connections (17) and the positive end terminal (4), the said inlays being interrupted by fuse holders (18).

2. Accumulator according to Claim 1, characterized in that the fuse holders (18) are arranged to be accessible from above.

3. Accumulator according to Claims 1 and 2, characterized in that the secondary connections (17) are designed as threaded bolts.

4. Accumulator according to one of Claims 1 to 3, characterized in that the conductive inlay in the baseplate (15) is undetachably connected to the positive end terminal (4) by welding or soldering.

5. Accumulator according to one of Claims 1 to 4, characterized in that the baseplate (15) is an integral component part of a battery fastening rail (20).

6. Accumulator according to one of Claims 1 to 5, characterized in that the connection (16) for the starter cable (16, 21) is arranged in the form of a tab inside or outside the battery outline.

7. Accumulator according to Claim 5, characterized in that the battery fastening rail (20) has a fastening eye (6) which projects beyond the battery outline.

## Revendications

1. Accumulateur, notamment batterie de démarrage pour véhicule automobile comprenant
- un boîtier traversé jusqu'à l'extérieur par les pôles de la batterie,
- au moins un pôle positif comportant, en plus d'un branchement électrique pour le câble de démarreur, également des branchements accessoires pour l'alimentation d'autres utilisateurs électriques du véhicule,
caractérisé en ce que
le branchement multiple est formé par une plaque de base (15) en matière plastique comportant des inserts conducteurs pour la mise en contact des branchements auxiliaires (17) avec le pôle positif (4), et qui sont munis de supports de fusibles (18).

2. Accumulateur selon la revendication 1,
caractérisé en ce que
les supports de fusibles (18) sont accessibles par le haut.

3. Accumulateur selon l'une des revendications 1 et 2,
caractérisé en ce que
les branchements auxiliaires (17) sont réalisés sous la forme de tiges filetées.

4. Accumulateur selon l'une des revendications 1 à 3,
caractérisé en ce que
l'insert conducteur de la plaque de base (15) est relié de manière solidaire au pôle positif (4) par soudure ou brasure.

5. Accumulateur selon l'une des revendications 1 à 4,
caractérisé en ce que
la plaque de base (15) fait partie intégrante d'un rail de fixation de batterie (20).

6. Accumulateur selon l'une des revendications 1 à 5,
caractérisé en ce que
le branchement (16) du câble de démarreur (16, 21) est une patte à l'intérieur ou à l'extérieur du contour de la batterie.

7. Accumulateur selon la revendication 5,
caractérisé en ce que
le rail de fixation de batterie (20) comporte des oeillets de fixation (6) qui dépassent du contour de la batterie.
